# EUROPÄISCHE PATENTSCHRIFT

(11) **EP 2 158 120 B1**
(45) Veröffentlichungstag und Bekanntmachung des Hinweises auf die Patenterteilung: **03.08.2011**
(21) Anmeldenummer: 08749963.8
(22) Anmeldetag: 30.04.2008
(51) Int. Cl.: B62M 9/12, B62K 25/02

(54) **SCHALTAUGE MIT EINSETZHILFE**
DERAILLEUR HANGER WITH INSERTION AID
PATTE DE DERAILLEUR AVEC AIDE A L'INSTALLATION

(30) Priorität: 05.05.2007 DE 202007006451 U
(43) Veröffentlichungstag der Anmeldung: 03.03.2010
(73) Patentinhaber: Klieber, Jochen, 83342 Tacherting (DE)
(72) Erfinder: GRÄTZ, Michael, 87487 Wiggensbach (DE)
(74) Vertreter: Maiwald Patentanwalts GmbH
(86) Internationale Anmeldenummer: PCT/EP2008/055389
(87) Internationale Veröffentlichungsnummer: WO 2008/135518

(56) Entgegenhaltungen:
- DE-U1- 9 018 008
- DE-U1-202006 003 055
- US-A- 5 082 303

## Beschreibung

Die vorliegende Erfindung betrifft ein Schaltauge für ein Fahrrad. Insbesondere betrifft die vorliegende Erfindung ein Schaltauge für ein Fahrrad welches eine Einsetzhilfe zum Einsetzen der Radnabe zwischen die Ausfallenden einer Gabel bzw. eines Rahmens aufweist.

Bei der Verwendung von Steckachsensystemen zur Radbefestigung wird im eingebauten Zustand die Radnabe, durch die hindurch sich die Steckachse erstreckt beidseitig in an den Ausfallenden vorgesehenen, nach unten geöffneten, U- förmigen Ausnehmungen aufgenommen. Auf diese Weise erfolgt eine einfache Anordnung der Radnabe in der für die Montage erforderlichen Position. Um einen möglichst spielfreien Sitz der Radnabe zu gewährleisten ist der Abstand der Ausfallenden auf die Länge der Radnabe abgestimmt, wobei lediglich ein geringfügig größerer Abstand der Ausfallenden vorgesehen wird, um einen möglichst spielfreien Sitz der Radnabe zu gewährleisten.

Beim Einsetzen des Rades in die Gabel bzw. den Rahmen resultiert hieraus häufig die Schwierigkeit, dass ein Verkannten der Radnabe zwischen den Ausfallenden erfolgen kann und hierdurch die Montage des Rades erschwert wird. Darüber hinaus erfolgt das Einsetzen des Hinterrades eine Fahrrads unter üblichen Bedingungen gegen den Zug der am Schaltwerk angeordneten Kettenspannvorrichtung, da bereits vor dem Einschieben der beiderseitigen Enden der Radnabe in die dafür vorgesehenen Ausnehmungen der Ausfallenden die Kette über das Ritzelpaket gelegt werden muss. Dies erschwert die Montage eines Rades, insbesondere im Falle einer Radbefestigung durch ein Steckachsensystem zum Teil erheblich.

Die DE 20 2006 003 055 U1, die den nächstliegenden Stand der Technik darstellt, beschreibt eine Abstützung für ein Schaltwerk, wobei ein Ausfallende eine Aufnahme für eine Schnellspannachse eines hinteren Laufrads und ein Schaltauge aufweist. Die US 5,082,303 beschreibt ein Ausfallende, bei dem ein austauschbarer Bereich zur Befestigung des Schaltwerks vorgesehen ist.

Aufgabe der vorliegenden Erfindung ist es daher eine Vorrichtung bereit zu stellen, welche die Nachteile des Standes der Technik überwindet und insbesondere mit einfachen Mitteln ermöglicht ein Rad für dessen Montage in die dafür vorgesehene Position zu bringen - gegebenenfalls auch gegen den Zug der Kettenspannvorrichtung - und hierfür bevorzugt eine einfach herzustellende und gewichtsverminderte Lösung bereit zu stellen.

Diese und weitere Aufgaben werden durch eine Vorrichtung für ein Fahrrad gemäß dem unabhängigen Anspruch 1 gelöst. Bevorzugte Ausführungsformen sind Gegenstand der abhängigen Ansprüche.

Demnach weist ein Schaltauge für ein Fahrrad, welches an einem ersten Ausfallende und/oder an einem zweiten Ausfallende erste bzw. zweite Ausnehmungen zur Aufnahme der entsprechenden Enden einer Radnabe aufweist eine erste Führungsfläche auf, welche eine im Wesentlichen stetige Fortführung der Seitenfläche, also der Randbegrenzungsfläche der entsprechenden Ausnehmung darstellt.

Die erfindungsgemäße Vorrichtung ermöglicht es damit, das jeweilige Ende der Radnabe bei der Montage des Rades an der ersten Führungsfläche des Schaltauges entlang zu bewegen, wodurch die Radnabe automatisch bis in ihre für die Montage vorgesehene Position innerhalb der Ausnehmungen der beiden Ausfallenden vorrückt. Durch die Anbringung einer entsprechend ausgestalteten ersten Führungsfläche am Schaltauge wird hierfür eine leicht herzustellende und insbesondere auch gewichtsverminderte Lösung bereit gestellt.

Gemäß der vorliegenden Erfindung weist die erste und/oder zweite Ausnehmung zudem eine seitliche Stützfläche auf, gegen welche sich das entsprechenden Ende der Radnabe im eingebauten Zustand durch das Verspannung der beiden Ausfallenden gegeneinander abstützt. Das Schaltauge ist in diesem Fall vorzugsweise so ausgeführt, dass der Verlauf der Stützfläche der Ausnehmung des Ausfallendes entlang einer zweiten Führungsfläche des Schaltauges im Wesentlichen stetig fortgesetzt ist.

Auf diese Weise wird beim Anlegen der Radnabe an die erste und zweite Führungsfläche des Schaltauges die Nabe derart geführt, das ein Verkeilen der Nabe bzw. ein Verschieben beispielsweise durch die auf die Nabe einseitig wirkenden Zugkräfte aufgrund der Kettenspannvorrich- tung erfolgreich vermieden wird. Die erste und zweite Führungsfläche schränkt dabei die Bewegungsbahn der Nabe in zwei Raumrichtungen so ein, dass diese auch unter erschwerten Bedingungen sicher und schnell in den hierfür vorgesehenen Ausnehmungen der Ausfallenden positioniert werden kann.

Vorzugsweise weist das erfindungsgemäße Schaltauge eine erste Bohrung zur Aufnahme eines ersten Befestigungsbolzens für ein Schaltwerk auf. Die erste Bohrung erstreckt sich dabei im Wesentlichen parallel zur Mittelachse der Radnabe.

Bei einer besonders bevorzugten Ausführungsform der vorliegenden Erfindung ist das Schaltauge als ein vom Ausfallende getrenntes Bauteil ausgeführt, welches im eingebauten Zustand am Ausfallende mittels wenigstens eines zweiten Befestigungsbolzens fixiert ist. Durch ein Lösen des Befestigungsbolzens besteht die Möglichkeit das Schaltauge, beispielsweise im Falle einer Beschädigung durch ein gleichartiges Schaltauge zu ersetzen.

Besonders bevorzugt erstreckt sich der zweite Befestigungsbolzen bezüglich der Mittelachse der Nabe im Wesentlichen senkrecht, wobei der zweite Befestigungsbolzen gegebenenfalls gleichzeitig zur Befestigung oder Verspannung weiterer Bauteile am Ausfallende verwendbar ist. Vorzugsweise weist das Schaltauge eine Gewindebohrung auf, in welche der zweite Befestigungsbolzen unmittelbar eingeschraubt werden kann und hierdurch das Schaltauge fest am entsprechenden Ausfallende befestigbar ist.

Zur weiteren verbesserten Fixierung des Schaltauges am Ausfallende und besonders, bevorzugt zur Vermeidung einer Rotation des Schaltauges um die Achse des zweiten Befestigungsbolzens, sowohl während der Montage als auch bei der Benutzung des Fahrrades, ist am Schaltauge eine Verdrehsicherung in Form eines Dorns vorgesehen, welcher in eine am Ausfallende angeordnete, korrespondierende Bohrung eingreift.

Weitere Merkmale der vorliegenden Erfindung ergeben sich aus der nachfolgenden detaillierten Beschreibung in Verbindung mit den Figuren und den Ansprüchen. Es zeigen:
- Fig. 1: eine zwischen zwei Ausfallenden montierte Radnabe;
- Fig. 2: ein erfindungsgemäßes Schaltauge mit Einsetzhilfe gemäß einer Ausführungsform der Erfindung im montierten Zustand;
- Fig. 3: ein erfindungsgemäßes Schaltauge mit Einsetzhilfe gemäß einer Ausführungsform der Erfindung im unmontierten Zustand.

Im Rahmen der nachfolgenden Beschreibung der Figuren kennzeichnen gleiche Bezugszeichen in verschiedenen Figuren gleiche Elemente bzw. Elemente mit gleichartigen Funktionen.

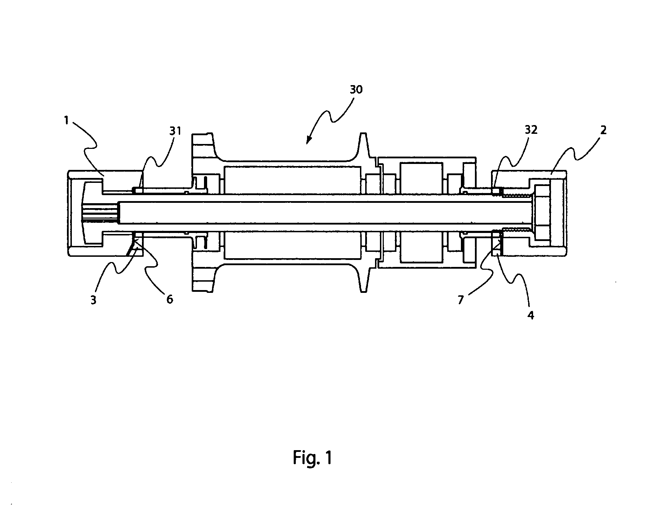

Fig. 1 zeigt eine mittels eines Steckachsensystems zur Radbefestigung montierte Radnabe, wie dies auch bereits im Stand der Technik bekannt ist. Hierbei ist die Radnabe 30 mit einem ersten Ende 31 in einer ersten Ausnehmung 3 des ersten Ausfallendes 1 aufgenommen und mit dem diesem gegenüber liegenden zweite Ende 32 in einer zweite Ausnehmung 4 des zweiten Ausfallendes 2.

Durch das Einschrauben und Festziehen der Steckachse, wie in Fig. 1 dargestellt erfolgt ein geringfügiges Zusammenziehen der beiden Ausfallenden 1, 2, wodurch die zwischen den Ausfallenden angeordnete Radnabe 30, zwischen den Stützflächen 6 und 7 verspannt wird.

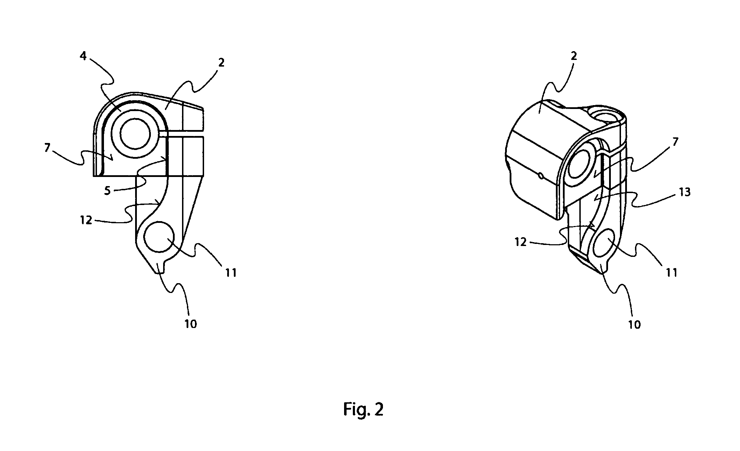

Um dieses Einsetzen der Radnabe in die Ausnehmungen 3, 4 zu erleichtern weist ein erfindungsgemäßes Schaltauge 10, wie in Figur 2 gezeigt ist, eine Führungsfläche 12 auf, deren Verlauf sich im Wesentlichen stetig in eine Seitenfläche 5 der Ausnehmung 4 des zweiten Ausfallendes 2 fortsetzt. Durch die Führungsfläche 12 wird die Bewegungsfreiheit der Radnabe in der Ebene der Fläche des Rades dahingehend beschränkt, dass ein entlangführen des Endes 32 der Nabe 30 an der Führungsfläche 12 automatisch dazu führt, dass dieses in die Ausnehmung 4 gleitet.

Gleiches gilt für die am Schaltauge 10 vorgesehene zweite Führungsfläche 13, welche eine im Wesentlichen stetige Fortführung der Stützfläche 7 des Ausfallendes 2 darstellt. Durch die zweite Führungsfläche 13 wird jedoch die Bewegungsfreiheit der Radnabe entlang der Radachse beschränkt, so dass hierdurch auch gegen den zum Teil erheblichen Zug der Kettenspannvorrichtung des Schaltwerks ein sicheres und schnelles Einsetzen der Radnabe in die dafür vorgesehenen Ausnehmungen der Ausfallenden gelingt.

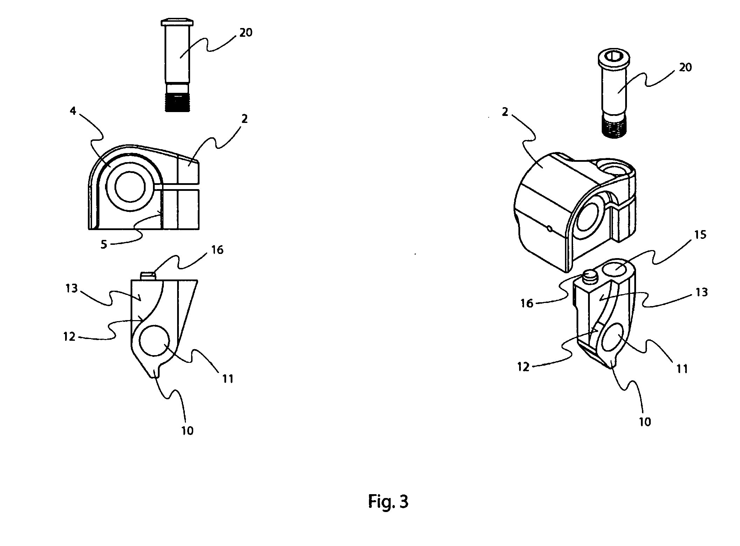

Die Figuren 2 und 3 zeigen die vom Ausfallende 2 getrennt ausgeführte Bauform eines erfindungsgemäßen Schaltauges 10, wobei der zweite Befestigungsbolzen 20 im Wesentlich senkrecht zur Mittelachse der Radnabe angeordnet ist.

Bei der Ausführungsform gemäß Fig. 3 ist am Schaltauge 10 ein Dorn 16 vorgesehen, welcher in eine hierzu korrespondierende Bohrung am Ausfallende 2 eingreift und nach dem Einsetzen und Festziehen des Befestigungsbolzens 20 zu einer Verbesserung der Stabilität der mechanischen Verbindung zwischen dem Schaltauge 10 und dem Ausfallende 2 führt. Insbesondere dient der Dorn 16 zur Sicherung gegen ein Verdrehen des Schaltauges 10 bezüglich des Ausfallendes 2 beim Anziehen des Befestigungsbolzen 20, so dass auf jeden Fall gewährleistet ist, dass sich die ersten und zweiten Führungsflächen des Schaltauges im Wesentlichen stetig in die Seitenfläche 5 und die Stützfläche 7 der Ausnehmung 4 fortsetzen.

## Patentansprüche

1. Vorrichtung zum Einsetzen einer Radnabe für ein Fahrrad, mit einem Schaltauge (10) und einem ersten Ausfallende (1) und/oder einem zweiten Ausfallende;
wobei an dem ersten Ausfallende (1) und/oder an dem zweiten Ausfallende (2) erste bzw. zweite Ausnehmungen (3, 4) vorgesehen sind zur Aufnahme der entsprechenden Enden (31, 32) einer Radnabe (30),
wobei
das Schaltauge (10) so ausgeführt ist, dass der Verlauf einer Seitenfläche (5) der Ausnehmung (4) durch eine erste Führungsfläche (12) des Schaltauges (10) im wesentlichen stetig fortgesetzt ist;
wobei die erste und/oder zweite Ausnehmung (3, 4) eine Stützfläche (6, 7) aufweist, gegen welche sich das korrespondierende Ende (31, 32) der Radnabe (30) im eingebauten Zustand abstützt, und das Schaltauge (10) so ausgeführt ist, dass der Verlauf der Stützfläche (7) der Ausnehmung (4) durch eine zweite Führungsfläche (13) des Schaltauges (10) im wesentlichen stetig fortgesetzt ist.

2. Vorrichtung gemäß Anspruch 1,
**dadurch gekennzeichnet, dass**
am Schaltauge (10) wenigstens eine erste Bohrung (11) zur Aufnahme eines ersten Befestigungsbolzens für ein Schaltwerk vorgesehen ist.

3. Vorrichtung gemäß einem der vorhergehenden Ansprüche,
**dadurch gekennzeichnet, dass**
das Schaltauge (10) als vom Ausfallende getrenntes Bauteil ausgeführt und im eingebauten Zustand am Ausfallende mittels wenigstens eines zweiten Befestigungsbolzens (20) lösbar befestigt ist.

4. Vorrichtung gemäß Anspruch 3,
**dadurch gekennzeichnet, dass**
die Befestigung mittels des zweiten Befestigungsbolzens (20) in zur Radachse (8) im wesentlichen senkrechter Richtung erfolgt.

5. Vorrichtung gemäß Anspruch 3 oder 4,
**dadurch gekennzeichnet, dass**
das Schaltauge (10) eine Gewindebohrung (15) aufweist, in welche der zweite Befestigungsbolzen (20) eingeschraubt ist.

6. Vorrichtung gemäß einem der Ansprüche 3 bis 5,
**dadurch gekennzeichnet, dass**
am Schaltauge (10) ein Dorn (16) vorgesehen ist, welcher im eingebauten Zustand in eine hierzu korrespondierende Bohrung eingreift.

7. Vorrichtung gemäß einem der Ansprüche 3 bis 6,
**dadurch gekennzeichnet, dass**
am Schaltauge (10) eine Verdrehsicherung vorgesehen ist, welche im eingebauten Zustand ein Verdrehen des Schaltauges (10) bezüglich des Ausfallendes behindert.

8. Vorrichtung gemäß einem der vorhergehenden Ansprüche,
**dadurch gekennzeichnet, dass**
das Schaltauge aus einem Material gefertigt ist, welches aus einer Gruppe ausgewählt ist, die Metalle und Metalllegierungen, insbesondere Leichtmetalle, vorzugsweise Aluminium und Aluminiumtitanlegierungen, sowie Kohlefaserwerkstoffe, Kunststoffe und insbesondere faserverstärkte Kunststoffe sowie Verbundwerkstoffe aus diesen Werkstoffen und Kombinationen hiervon enthält.

## Claims

1. Device for insertion of a wheel hub for a bicycle having a derailleur hanger (10) and a first dropout (1) and/or a second dropout;
wherein first and second recesses (3, 4) are provided at the first dropout (1) and/or at the second dropout (2), respectively, for receiving the corresponding ends (31, 32) of a wheel hub (30),
wherein the derailleur hanger (10) is configured such that the shape of a lateral surface (5) of the recess (4) is substantially steadily continued by a first guide surface (12) of the derailleur hanger (10);
wherein the first and/or the second recess (3, 4) comprises a support surface (6, 7), against which the corresponding end (31, 32) of the wheel hub (30) is supported in the assembled state, and the derailleur hanger (10) is configured such that the shape of the support surface (7) of the recess (4) is substantially steadily continued by a second guide surface (13) of the derailleur hanger (10).

2. Device according to claim 1,
**characterized in that**
provided on the derailleur hanger (10) is at least a first hole (11) for receiving a first fastening bolt for a derailleur.

3. Device according to one of the preceding claims,
**characterized in that**
the derailleur hanger (10) is configured as a part separate from the dropout and is releasably attached to the dropout by at least a second fastening bolt (20) in the assembled state.

4. Device according to claim 3,
**characterized in that**
the attachment by means of the second fastening bolt (20) is in a direction substantially perpendicular to the wheel axle (8)

5. Device according to one of claims 3 or 4,
**characterized in that**
the derailleur hanger (10) comprises a threaded hole (15) into which the second fastening bolt (20) is screwed.

6. Device according to one of claims 3 to 5,
**characterized in that**
provided on the derailleur hanger (10) is a pin (16) which in the assembled state engages with a corresponding hole.

7. Device according to one of claims 3 to 6,
**characterized in that**
provided on the derailleur hanger (10) is an anti-rotation element which in the assembled state prevents twisting of the derailleur hanger (10) relative to the dropout.

8. Device according to one of the preceding claims,
**characterized in that**
the derailleur hanger is made of a material selected from a group comprising metals and metal alloys, particularly light metals, preferably aluminum and aluminum titanium alloys, and carbon fiber materials, plastics and particularly fiber-reinforced plastics, and composites of these materials and combinations thereof.

## Revendications

1. Dispositif destiné à la mise en place d'un moyeu de roue pour une bicyclette, comprenant un oeillet de couplage (10) et une première extrémité d'entraxe (1) et/ou une seconde extrémité d'entraxe ;
dispositif dans lequel
des premiers et/ou seconds creux (3, 4) sont prévus sur la première extrémité d'entraxe (1) et/ou sur la seconde extrémité d'entraxe (2) pour recevoir les extrémités correspondantes (31, 32) d'un moyeu de roue (30),
l'oeillet de couplage (10) a une réalisation telle que l'allure d'une surface latérale (5) du creux (4) se prolonge essentiellement en continu par une première surface de guidage (12) de l'oeillet de couplage (10) ;
le premier et/ou le second creux (3, 4) présentent une surface d'appui (6, 7), contre laquelle s'appuie l'extrémité correspondante (31, 32) du moyeu de roue (30) dans l'état de montage, et l'oeillet de couplage (10) a une réalisation telle que l'allure de la surface d'appui (7) du creux (4) se prolonge essentiellement en continu par une seconde surface de guidage (13) de l'oeillet de couplage (10).

2. Dispositif suivant la revendication 1, **caractérisé en ce qu'**au moins un premier trou (11) est prévu sur l'oeillet de couplage (10) pour recevoir un premier boulon de serrage pour un mécanisme d'encliquetage.

3. Dispositif suivant l'une des revendications précédentes, **caractérisé en ce que** l'oeillet de couplage (10) est réalisé sous forme de composant séparé de l'extrémité d'entraxe et est fixé de façon amovible sur l'extrémité d'entraxe, dans l'état de montage, au moyen d'au moins un second boulon de serrage (20).

4. Dispositif suivant la revendication 3, **caractérisé en ce que** la fixation au moyen du second boulon de serrage (20) s'effectue dans la direction essentiellement perpen-diculaire par rapport à l'axe (8) du moyeu.

5. Dispositif suivant l'une des revendications 3 ou 4, **caractérisé en ce que** l'oeillet de couplage (10) présente un taraudage (15), dans lequel est vissé le second boulon de serrage (20).

6. Dispositif suivant l'une des revendications 3 à 5, **caractérisé en ce qu'**un tourillon (16), qui s'engage dans l'état de montage dans un trou correspondant, est prévu sur l'oeillet de couplage (10).

7. Dispositif suivant l'une des revendications 3 à 6, **caractérisé en ce qu'**une fixation, qui empêche dans l'état de montage une rotation de l'oeillet de couplage (10) par rapport à l'extrémité d'entraxe, est prévue sur l'oeillet de couplage (10).

8. Dispositif suivant l'une des revendications précédentes, **caractérisé en ce que** l'oeillet de couplage est fabriqué en un matériau, sélectionné parmi un groupe qui comporte des métaux et alliages de métaux, en particulier des alliages légers, de préférence de l'aluminium et des alliages de titane et d'aluminium, ainsi que des matériaux en fibres de carbone, des matières plastiques et en particulier des matières plastiques renforcées par fibres, ainsi que des matériaux composites composés de ces matériaux et de combinaisons de ces derniers.
